# EUROPÄISCHE PATENTSCHRIFT

(11) **EP 2 256 469 B1**
(45) Veröffentlichungstag und Bekanntmachung des Hinweises auf die Patenterteilung: **25.01.2017**
(21) Anmeldenummer: 10005331.3
(22) Anmeldetag: 21.05.2010
(51) Int. Cl.: G01F 23/74

(54) **Vorrichtung zum Anzeigen und/oder Kontrollieren von Fluiden**
Device for displaying and/or controlling fluids
Dispositif d'affichage et/ou de contrôle de fluides

(30) Priorität: 29.05.2009 DE 102009023343
(43) Veröffentlichungstag der Anmeldung: 01.12.2010
(73) Patentinhaber: Hydac Accessories GmbH, 66280 Sulzbach/Saar (DE)
(72) Erfinder: Käfer, Jürgen, 66578 Schiffweiler (DE)
(74) Vertreter: Bartels & Partner

(56) Entgegenhaltungen:
- DE-A1- 2 062 451
- DE-A1- 10 227 673
- US-A- 2 456 233
- US-A- 3 473 102

## Beschreibung

Die Erfindung betrifft eine Vorrichtung zum Anzeigen und/oder Kontrollieren von Fluiden, mit mindestens einem Fluidanschluss, der in ein Steigrohr mündet, in dem abhängig vom Fluidniveau innerhalb eines Anzeigeweges ein Schwimmerkörper verfahrbar geführt ist, an dem ein Auslöseelement angeordnet ist, das durch Einwirkung auf zumindest ein Detektorelement, das sich an einer einem vorgegebenen Fluidniveau entsprechenden Position an der Vorrichtung befindet, einen Schaltvorgang einer elektrischen Schalteineinrichtung auslöst, wobei eine Einstelleinrichtung vorhanden ist, mittels deren das zumindest eine Detektorelement in wählbare, unterschiedlichen Fluidniveaus entsprechende Positionen einstellbar ist, wobei die Vorrichtung ein das Steigrohr teilweise umgebendes Gehäuse aufweist, und wobei die Einstelleinrichtung mindestens eine sich entlang zumindest eines Teils des Anzeigeweges erstreckende Führungsbahn bildet, längs der ein Detektorelement oder mehrere Detektorelemente zur Positionseinstellung verschiebbar und in ausgewählter Einstellposition festlegbar ist bzw. sind.

Eine derartige Vorrichtung ist aus DE 102 27 673 A1 bekannt. Bekannt ist eine Füllstandsanzeige umfassend ein Gehäuse aus einer Bodenplatte, einer Deckelplatte und einem Schutzrohr aus Plexiglas, welches die eigentliche Füllstandsanzeige umgibt. Zwischen der Bodenplatte und der Deckelplatte ist ein Halteprofil angeordnet, an welchem Sensorhalter angebracht sind. Die Halter können entlang des Profils je nach zu überwachenden Füllständen positioniert werden. Insbesondere können noch weitere Halter vorgesehen oder einige der Halter weggelassen werden. In der Bodenplatte befindet sich eine Öffnung, durch welche ein Schwimmrohr als Signalgeber in das Gehäuse hineinragt. An dem unteren Ende des Schwimmerrohrs ist mittels einer Schraube, welche eine in dem Schwimmerrohr angebrachte Buchse durchgreift, ein Schwimmer angebracht. Die jeweiligen Sensoren bzw. Näherungsschalter sind über die Halter an dem Profil angebracht. Dadurch, dass die Sensoren sehr nahe an das Rohr herangebracht werden können, kann die Sensitivität der Sensoren gegenüber dem Rohr sehr hoch ausgestaltet werden.

Eine weitere Vorrichtung ist aus DE 2 062 451 A1 bekannt. Die bekannte Vorrichtung ist ein Schwimmerschalter mit Magnetbetätigung, bei dem die Steuerung eines Elektromotors über Permanentmagnete erfolgt und welcher außer seinem Schwimmer im Inneren des Behälters keine beweglichen Bauteile und auch keine elektrischen Leitungen aufweist. Die Vorrichtung weist einen Schwimmer mit zwei an ihm angebrachten Dauermagneten, ein oberes Magnetpaar und ein unteres Magnetpaar am Führungsrohr auf. Der Schwimmer ist in dem durch seine Längsachse führenden, aus unmagnetischem Werkstoff hergestellten Führungsrohr beweglich angeordnet, an welchen radial die Magnetpaare angeordnet sind. In dem Flüssigkeitsbehälter bewegt sich der Schwimmer an seinem Führungsrohr mit dem Flüssigkeitsspiegel und bewirkt durch die magnetische Anziehung bzw. Abstoßung eine Drehbewegung und eine daraus resultierende Schaltstellung.

Dadurch, dass eine Einstelleinrichtung vorhanden ist, mittels deren das zumindest eine Detektorelement in wählbare, unterschiedlichen Fluidniveaus entsprechende Positionen einstellbar ist, lässt sich die Vorrichtung auf einfache Weise an die dem jeweiligen Einsatzzweck entsprechenden Anforderungen hinsichtlich Anzeige- und/oder Steuerfunktion anpassen. So lassen sich durch die gewünschte Lageeinstellung des jeweiligen Detektorelementes entlang des Anzeigeweges Schaltpunkte für die elektrische Schalteinrichtung definieren, die vorgegebene Maxima oder Minima des Füllstandes signal isieren.

Weitere Vorrichtungen sind bekannt, vgl. DE 199 16 953 A1. Derartige Vorrichtungen, die auch als Flüssigkeitsstandskontrolle (FSK) bezeichnet werden, dienen der Anzeige des Niveaus einer Flüssigkeit innerhalb eines Behälters, wobei die Vorrichtung außerhalb des Behälters angebracht, jedoch über mindestens einen Fluidanschluss mit diesem in der Art von kommunizierenden Röhren verbunden ist. Bei einer solchen Vorrichtung kann der jeweils aktuelle Füllstand optisch, beispielsweise durch visuelles Beobachten der Lage des Schwimmerkörpers, angezeigt werden, oder es kann bei einem vorgebbaren Wert des Füllstandes ein elektrisches Schaltsignal in der Weise erzeugt werden, dass das Auslöseelement am Schwimmerkörper bei einer vorgebbaren Position innerhalb seines Anzeigeweges auf das Detektorelement der Schalteinrichtung einwirkt. Beim Auftreten des Signales können die bei Erreichen des betreffenden Füllstandes notwendigen Aktionen manuell oder automatisch vorgenommen werden.

Als Fluide, die mittels derartiger Vorrichtungen angezeigt und/oder kontrolliert werden sollen, kommen insbesondere Druckflüssigkeiten infrage, wie Mineralöl nach DIN 51524, Teil 1 und 2, Kraftstoffe, Wasser-Öl-Emulsionen und synthetische Flüssigkeiten, wie Hydraulikflüssigkeiten auf Phosphat-Ester-Basis. Als Detektorelement weist die erwähnte, bekannte Vorrichtung einen Reed-Schalter und als Auslöseelement einen im Schwimmerkörper angeordneten Magneten auf. Für die visuelle Anzeige des jeweils aktuellen Füllstandes kann das Steigrohr als Plexiglasrohr ausgebildet sein, so dass die Position des Schwimmerkörpers von einem Betrachter beobachtet werden kann.

Der Erfindung liegt die Aufgabe zugrunde, eine Vorrichtung der besagten Art zur Verfügung zu stellen, welche eine erweiterte Vielzahl an Einsatzmöglichkeiten bietet.

Erfindungsgemäß ist diese Aufgabe durch eine Vorrichtung gelöst, die die Merkmale des Patentanspruches 1 in seiner Gesamtheit aufweist. Besondere Ausführungsarten der Erfindung sind in den Unteransprüchen definiert.

Dadurch, dass erfindungsgemäß entsprechend dem kennzeichnenden Teil des Patentanspruches 1 sich die Einstelleinrichtung am Gehäuse befindet, ist durch eine derartige, eine Verschiebeführung bildende Führungsbahn eine besonders einfache und bequeme stufenlose Höheneinstellung eines oder mehrerer Detektorelemente möglich.

Erfindungsgemäß ist die Anordnung so getroffen, dass das Gehäuse eine Frontwand mit zumindest einer ein Sichtfenster bildenden Unterbrechung sowie an die Frontwand angrenzende Seitenwände aufweist, wobei an mindestens einer Seitenwand zumindest eine sich entlang der Hochachse des Gehäuses erstreckende Führungsbahn der Verstell-, insbesondere Verschiebeeinrichtung gebildet ist.

Bei besonders vorteilhaften Ausführungsbeispielen ist die Einstelleinrichtung durch eine Verschiebeeinrichtung gebildet, mittels deren das zumindest eine Detektorelement in gewählte Einstellpositionen verschiebbar ist. Die Anpassung oder Einrichtung der Vorrichtung entsprechend den Erfordernissen, die bei den unterschiedlichen Einsatzgebieten gegeben sind, gestaltet sich dadurch besonders einfach und bequem.

In besonders vorteilhafter Weise kann die Anordnung so getroffen sein, dass mehrere, in jeweils gewählte Einstellpositionen einstellbare Detektorelemente vorgesehen sind. Dadurch lassen sich auf einfache Weise unterschiedliche Schalt- oder Signalpunkte generieren, beispielsweise sowohl für Signalerzeugung bei maximalen und minimalen Füllständen als auch zur Signalisierung von Zwischenständen, etwa zur Signalisierung der im Betrieb entsprechender Anlagen auftretenden Schwankungen des Fluidniveaus.

Bei Ausführungsbeispielen, bei denen an beiden Seitenwänden zumindest eine Führungsbahn gebildet ist, eröffnet sich die besonders vorteilhafte Möglichkeit, zu beiden Seiten des Steigrohres Detektorelemente in jeweils gleicher, ein und demselben Fluidniveau entsprechender Einstellposition anzuordnen. Dadurch ist eine redundante Signalisierung für besonders system- oder sicherheitsrelevante Fluidniveaus möglich, etwa für Maxima und Minima oder andere Füllstände, bei denen bei Ausfall eines Detektorelementes oder einer Schalteinrichtung der entsprechende Signalverlust sicherheitsgefährdend wäre.

Bei besonders vorteilhaften Ausführungsbeispielen kann die jeweilige Führungsbahn durch einen Längsschlitz in der betreffenden Seitenwand gebildet sein. Eine solche Anordnung eröffnet die vorteilhafte Möglichkeit, dass im Zwischenraum zwischen zumindest einer Seitenwand und dem Steigrohr mindestens ein ein Detektorelement enthaltender Detektorträger vorgesehen ist, der einen Führungsansatz aufweist, der im betreffenden Längsschlitz verschiebbar geführt ist. Dadurch ist an der jeweils betreffenden Seitenwand eine Verschiebeeinrichtung in Form einer Linearführung gebildet.

Bei einer derartigen Bauweise gestaltet sich die Fixierung betreffender Detektorelemente in der jeweiligen Einstellposition besonders einfach und sicher, wenn sich an den Führungsansatz des jeweiligen Detektorträgers ein mit einem Außengewinde versehener Zapfen anschließt, der mit einer an die Außenseite der Seitenwand mittels einer Mutter anklemmbaren Klemmscheibe eine Festlegeeinrichtung des Detektorträgers bildet.

Bei besonders vorteilhaften Ausführungsbeispielen kann der jeweilige Detektorträger mit Führungsansatz und Gewindezapfen durch ein einteiliges Spritzgußteil aus Kunststoff, beispielsweise aus PA6 gebildet sein, in das das Detektorelement in Form eines Reed-Schalters eingebettet ist. Bei aus einem derartigen, elektrisch isolierenden Werkstoff gebildeten Detektorträger gestaltet sich die Kontaktierung des eingebetteten Reed-Schalters mit ebenfalls eingebetteten elektrischen Leitern besonders einfach.

Bezüglich des äußeren Anschlusses der zugeordneten Schalteinrichtung kann hierbei die Anordnung mit Vorteil so getroffen sein, dass eingebettete elektrische Anschlüsse des Reed-Schalters durch den Gewindezapfen nach außen geführt sind und dass dessen Ende einen Anschlussstecker für den Anschluss eines Schraub-Steckverbinders bildet, der mit dem Außengewinde des Zapfens verschraubbar ist.

Nachstehend ist die Erfindung anhand von in der Zeichnung dargestellten Ausführungsbeispielen im Einzelnen erläutert. Es zeigen:
- Fig. 1: eine gegenüber einer praktischen Ausführungsform leicht verkleinert gezeichnete perspektivische Schrägansicht eines Ausführungsbeispieles der erfindungsgemäßen Vorrichtung, wobei lediglich ein zugehöriger Steckverbinder eingezeichnet ist;
- Fig. 2: eine leicht vergrößert gezeichnete Seitenansicht des Ausführungsbeispieles von Fig. 1, ohne Steckverbinder;
- Fig. 3: eine Schnittdarstellung entsprechend der Schnittlinie III-III von Fig. 2;
- Fig. 4: eine abgebrochen, teilweise auseinandergezogen und gegenüber einer praktischen Ausführungsform vergrößert gezeichnete perspektivische Schrägansicht lediglich eines Längenabschnittes des Gehäuses des Ausführungsbeispieles mit einem an einer Seitenwand befindlichen Detektorträger;
- Fig. 5: eine gegenüber Fig. 4 in geringfügig noch größerem Maßstab gezeichnete, perspektivische Schrägansicht lediglich des Detektorträgers mit gesondert dargestellten Klemmteilen;
- Fig. 6: eine gegenüber einer praktischen Ausführungsform verkleinert dargestellte perspektivische Schrägansicht lediglich des Gehäuses eines abgewandelten Ausführungsbeispieles und
- Fig. 7: eine gegenüber einer praktischen Ausführungsform etwa in halber Größe gezeichnete Vorderansicht eines weiteren Ausführungsbeispieles mit einem eingezeichneten Steckverbinder.

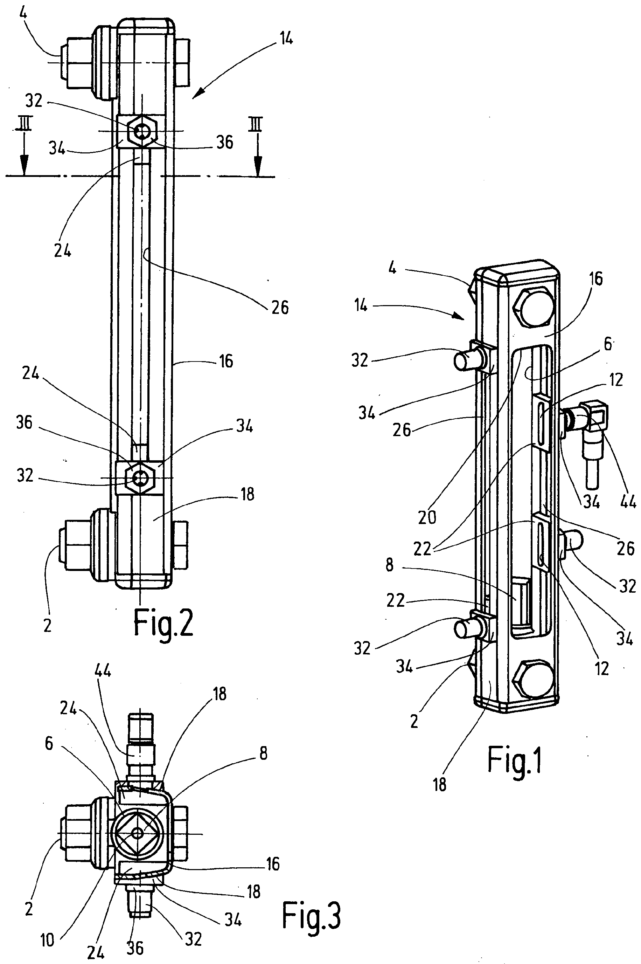

Bei den in der Zeichnung dargestellten Ausführungsbeispielen weist die Vorrichtung einen unteren Fluidanschluss 2 und einen oberen Fluidanschluss 4 auf, die mit einem Steigrohr 6 an dessen unterem Ende bzw. oberem Ende in Fluidverbindung sind. Bei dem Steigrohr 6 handelt es sich um ein Plexiglasrohr, in dem ein Schwimmerkörper 8 entsprechend dem Fluidniveau im Steigrohr 6 innerhalb eines Anzeigeweges eine Schwimmposition einnimmt. Wie am besten aus Fig. 3 zu ersehen ist, hat der Schwimmerkörper 8 eine unrunde, im Querschnitt etwa quadratische Form, so dass er mit der Innenseite des Steigrohres 6 nicht großflächig in Berührung ist. In den Schwimmerkörper 8 ist ein Permanentmagnet 10 in Form eines Ferritstabes koaxial eingesetzt, von dem in Fig. 3 lediglich ein Ende sichtbar ist. Der Magnet 10 bildet am Schwimmerkörper 8 ein Auslöseelement, das, wenn der Schwimmerkörper 8 eine einem vorgegebenen Fluidniveau entsprechende Position innerhalb des Anzeigeweges einnimmt, auf ein Detektorelement einwirkt, das als Bestandteil einer Schalteinrichtung ein elektrisches Signal erzeugt und/oder einen elektrischen Schaltvorgang bewirkt. Bei den vorliegenden Ausführungsbeispielen sind die jeweiligen Detektorelemente in Form von Reed-Schaltern 12 (Fig. 1) vorgesehen, worauf unten näher eingegangen wird.

Das Steigrohr 6 ist von einem Gehäuse 14 aus einem Aluminiumwerkstoff umgeben, das eine Frontwand 16 sowie sich beidseits anschließende, zur Frontwand 16 stumpfwinklig verlaufende Seitenwände 18 aufweist. In der Frontwand 16 befindet sich eine Aussparung 20, die ein sich über den Anzeigeweg des Schwimmerkörpers 8 erstreckendes Sichtfenster bildet, durch das die Position des Schwimmerkörpers 8 und damit die Höhe des Fluidniveaus durch das aus Plexiglas gebildete Steigrohr 6 hindurch visuell beobachtbar ist. Da der Schwimmerkörper 8 nicht in großflächiger Anlage an der Innenwand des Steigrohres 6 ist, besteht keine Gefahr eines Anklebens des Schwimmerkörpers 8, so dass sich dieser zuverlässig in eine dem Fluidniveau entsprechende Position im Steigrohr 6 bewegen kann.

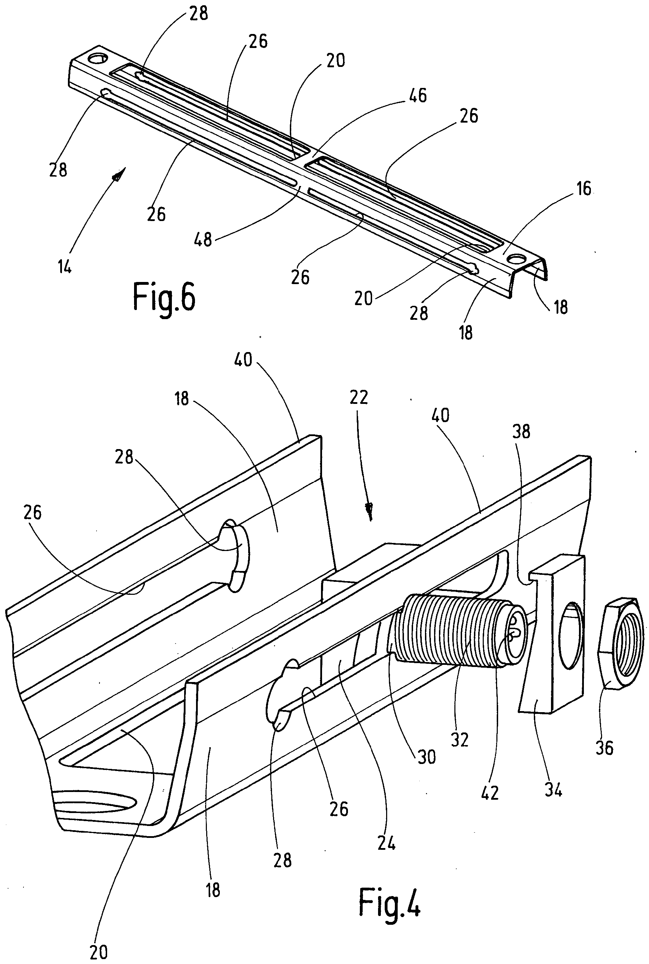

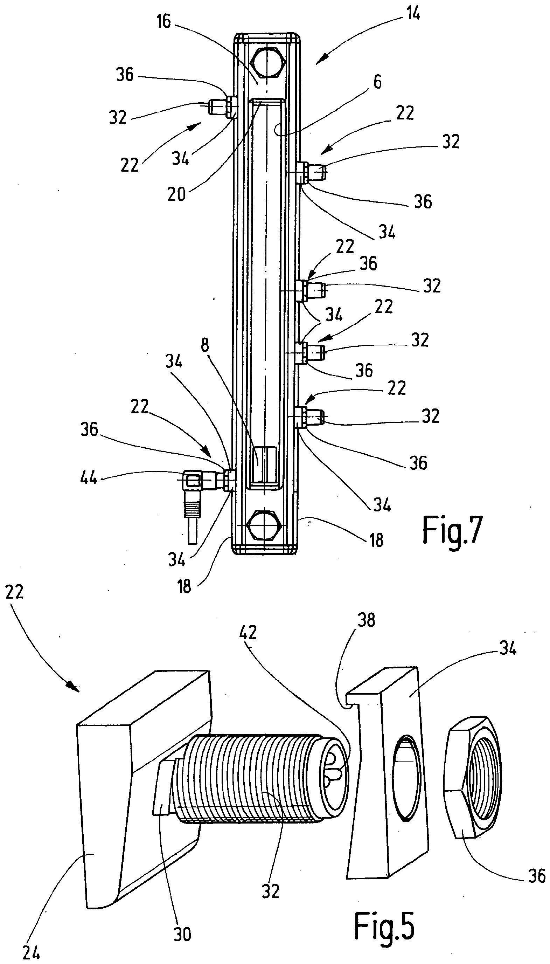

Bei den vorliegenden Beispielen weist die Schalteinrichtung als Detektorelemente bei sämtlichen Ausführungsbeispielen Reed-Schalter 12 in üblicher Bauweise auf, so dass sie zeichnerisch nicht näher dargestellt sind. Lediglich in Fig. 1 sind zwei Reed-Schalter 12 angedeutet, die in jeweils einen Detektorträger 22 eingebettet sind, dessen Bauweise aus den Fig. 4 und 5 deutlicher entnehmbar ist und der aus einem isolierenden Kunststoffmaterial, beispielsweise PA6, als einstückiges Spritzgussteil hergestellt ist. Hauptteil des Detektorträgers 22 ist ein Führungsschuh 24, in den der Reed-Schalter 12 eingebettet ist und dessen Außenform der Querschnittsform des Zwischenraumes angepasst ist, der innerhalb des Gehäuses 14 zwischen den Seitenwänden 18 und dem Steigrohr 6 gebildet ist, so dass, wie aus Fig. 3 entnehmbar ist, die Führungsschuhe 24 zwischen Steigrohr 6 und benachbarter Seitenwand 18 aufnehmbar sind. Wie aus Fig. 1, 2 und 4 am deutlichsten ersichtlich ist, sind die Seitenwände 18 durch Längsschlitze 26 mit einer endseitigen Erweiterung 28 durchbrochen. An den Führungsschuh 24 der Detektorträger 22 schließt sich ein rechteckförmiger Führungsansatz 30 an, an den sich wiederum ein mit Außengewinde versehener Zapfen 32 anschließt, wobei Ansatz 30 und Zapfen 32 mit dem Führungsschuh 24 einteilig zusammenhängend sind. Nach Durchstecken des Zapfens 32 durch die Erweiterung 28 des betreffenden Längsschlitzes 26 ist, wie in Fig. 4 deutlich zu ersehen ist, der Detektorträger 22 in dem eine Linearführungseinrichtung bildenden Längsschlitz 26 verschiebbar geführt. Zur Festlegung der Einstellposition längs des Längsschlitzes 26 ist eine Klemmscheibe 34 mittels einer Spannmutter 36, die auf das Außengewinde des Zapfens 32 aufschraubbar ist, an die Außenseite der betreffenden Seitenwand 18 anklemmbar. Wie ersichtlich, weist die Klemmscheibe 34 an der Innenseite eine der Form der Außenseite der Seitenwand 18 und der Kontur des Führungsschuhes 24 angepasste Konturierung auf, wobei an dem in der Zeichnung obenliegenden Ende der Klemmscheibe 34 eine Führungsschiene 38 in Form eines vorstehenden Randes gebildet ist, die den betreffenden Endrand 40 der zugeordneten Seitenwand 18 übergreift. In jedem Längsschlitz 26 sind somit einer oder mehrere Detektorträger 22 zur Positionseinstellung verschiebbar und durch Festziehen der Mutter 36 in der Einstellposition festlegbar.

Bei dem in Fig. 1 und 2 gezeigten Ausführungsbeispiel ist an jeder Seitenwand 18 ein sich im wesentlichen über den gesamten Anzeigeweg erstrekkender Längsschlitz 26 vorgesehen, wobei in jedem der Längsschlitze 26 jeweils zwei Detektorträger 22 geführt sind. Die Detektorträger 22 sind bei dem zeichnerisch dargestellten Beispiel in der Weise angeordnet, dass in dem in Fig. 1 linksseitig gelegenen Längsschlitz 26 ein Detektorträger 22 in einer einem Fluidminimum entsprechenden Position und der andere Detektorträger 22 in einer einem Fluidmaximum entsprechenden Position angeordnet ist, während die im anderen Längsschlitz 26 geführten Detektorträger 22 in Zwischenständen des Niveaus entsprechenden Positionen angeordnet sind. Bei der Darstellung von Fig. 1 bis 3 ist an den Anschlussstekkern 42 (Fig. 4 und 5) lediglich ein mit dem Außengewinde des Zapfens 32 verschraubter Schraub-Steckverbinder 44 eingezeichnet.

Das in Fig. 7 gezeigte Ausführungsbeispiel unterscheidet sich vom ersten Ausführungsbeispiel lediglich insofern, als durch eine größere Länge des Gehäuses 14 und damit des Steigrohres 6 ein längerer Anzeigeweg gebildet ist und dass in dem in der Fig. rechtsseitig gelegenen Längsschlitz 26 vier Detektorträger 22 angeordnet sind, die vier Zwischenständen des Fluidniveaus entsprechen, während in dem in Fig. 7 linksseitig gelegenen Längsschlitz 26 zwei Detektorträger 22 in Positionen zur Anzeige eines Fluidmaximums und eines Fluidminimums angeordnet sind. Wiederum ist an nur einem Detektorträger 22 ein Schraub-Steckverbinder 44 eingezeichnet.

Entsprechend der Darstellung des ersten Ausführungsbeispieles sind die an den Seitenwänden 18 befindlichen Detektorträger 22 jeweils in unterschiedlichen Einstellpositionen festgelegt. Um eine redundante Anzeige oder Signalerzeugung zu realisieren, können, wie bereits erwähnt, Detektorträger 22 in gleicher Einstellposition an beiden Seitenwänden 18 festgelegt sein, was in der Zeichnung nicht dargestellt ist.

Bei weiter abgewandelten Ausführungsbeispielen, bei denen eine noch größere Länge des Anzeigeweges vorgesehen ist und gegebenenfalls eine größere Anzahl von Detektorträgern 22 in Einstellpositionen zur Signalisierung weiterer Schaltpunkte vorhanden sind, kann das Gehäuse 14 in der in Fig. 6 gezeigten Bauweise gestaltet sein. Dabei weist die Frontwand 16, wie ersichtlich, zwei Aussparungen 20 auf, so dass ein langes, durch einen Zwischensteg 46 unterbrochenes Sichtfenster gebildet ist. Entsprechend der großen Baulänge sind an jeder Seitenwand 18 zwei längs eines Teilabschnittes des Anzeigeweges verlaufende Längsschlitze 26 gebildet, die ebenfalls durch einen Trennsteg 48 voneinander getrennt sind.

Die als Bestandteil der Festlegeeinrichtung vorgesehene Klemmscheibe 34 kann, wie auch der Detektorträger 22, aus einem Kunststoffwerkstoff, wie PA6, als Spritzgussteil hergestellt sein. Es versteht sich, dass anstelle von Reed-Schaltern 12 als Detektoren und Magneten 10 als Auslöser geeignete andere Sensoreinrichtungen zur Positionserkennung angewendet werden könnten, beispielsweise photoelektrische Sensoreinrichtungen oder dergleichen.

## Patentansprüche

1. Vorrichtung zum Anzeigen und/oder Kontrollieren von Fluiden,
- mit mindestens einem Fluidanschluss (2, 4), der in ein Steigrohr (6) mündet, in dem abhängig vom Fluidniveau innerhalb eines Anzeigeweges ein Schwimmerkörper (8) verfahrbar geführt ist, an dem ein Auslöseelement (10) angeordnet ist, das durch Einwirkung auf zumindest ein Detektorelement (12), das sich an einer, einem vorgegebenen Fluidniveau entsprechenden Position an der Vorrichtung befindet, einen Schaltvorgang einer elektrischen Schalteinrichtung auslöst,
**dadurch gekennzeichnet, dass**
- eine Einstelleinrichtung (24, 26) vorhanden ist, mittels deren das zumindest eine Detektorelement (12) in wählbare, unterschiedlichen Fluidniveaus entsprechende Positionen einstellbar ist,
- wobei die Vorrichtung (1) ein das Steigrohr (6) teilweise umgebendes Gehäuse (14) aufweist, und
- wobei die Einstelleinrichtung (24, 26) mindestens eine sich entlang zumindest eines Teils des Anzeigeweges erstreckende Führungsbahn bildet, längs der ein Detektorelement oder mehrere Detektorelemente (12) zur Positionseinstellung verschiebbar und in ausgewählter Einstellposition festlegbar ist bzw. sind,
- wobei sich die Einstelleinrichtung (24, 26) am Gehäuse (14) befindet,
- das Gehäuse (14) eine Frontwand (16) mit zumindest einer, ein Sichtfenster bildenden Unterbrechung (20), sowie an die Frontwand (16) angrenzende Seitenwände (18) aufweist, und
- die Einstelleinrichtung (24, 26) an mindestens einer Seitenwand (18) zumindest eine sich entlang der Hochachse des Gehäuses (14) erstreckende Führungsbahn umfasst.

2. Vorrichtung nach Anspruch 1, **dadurch gekennzeichnet, dass** die Einstelleinrichtung weiter eine Verschiebeeinrichtung (24, 26) umfasst, mittels deren das zumindest eine Detektorelement (12) in gewählte Einstellpositionen verschiebbar ist.

3. Vorrichtung nach Anspruch 1 oder 2, **dadurch gekennzeichnet, dass** mehrere, in jeweils gewählte Einstellpositionen einstellbare Detektorelemente (12) vorgesehen sind.

4. Vorrichtung nach einem der vorhergehenden Ansprüche, **dadurch gekennzeichnet, dass** an beiden Seitenwänden (18) zumindest eine Führungsbahn gebildet ist.

5. Vorrichtung nach einem der vorhergehenden Ansprüche, **dadurch gekennzeichnet, dass** die jeweilige Führungsbahn durch einen Längsschlitz (26) in der betreffenden Seitenwand (18) gebildet ist.

6. Vorrichtung nach Anspruch 5, **dadurch gekennzeichnet, dass** im Zwischenraum zwischen zumindest einer Seitenwand (18) und dem Steigrohr (6) mindestens ein, ein Detektorelement (12) enthaltender Detektorträger (22) vorgesehen ist, der einen Führungsansatz (30) aufweist, der im betreffenden Längsschlitz (26) verschiebbar geführt ist.

7. Vorrichtung nach Anspruch 6, **dadurch gekennzeichnet, dass** sich an den Führungsansatz (30) des jeweiligen Detektorträgers (22) ein mit einem Außengewinde versehener Zapfen (32) anschließt, der mit einer an die Außenseite der Seitenwand (18) mittels einer Mutter (36) anklemmbaren Klemmscheibe (34) eine Festlegeeinrichtung des Detektorträgers (22) bildet.

8. Vorrichtung nach Anspruch 7, **dadurch gekennzeichnet, dass** der jeweilige Detektorträger (22) mit Führungsansatz (30) und Gewindezapfen (32) durch ein einteiliges Spritzgussteil aus Kunststoff, beispielsweise aus PA6, gebildet ist, in das das Detektorelement in Form eines Reed-Schalters (12) eingebettet ist.

9. Vorrichtung nach Anspruch 8, **dadurch gekennzeichnet, dass** eingebettete elektrische Anschlüsse des Reed-Schalters (12) durch den Gewindezapfen (32) nach außen geführt sind und dass dessen Ende einen Anschlussstecker (42) für den Anschluss eines Schraub-Steckverbinders (44) bildet, der mit dem Außengewinde des Zapfens (32) verschraubbar ist.

## Claims

1. A device for displaying and/or monitoring fluids,
- comprising at least one fluid port (2, 4) that opens out into a riser pipe (6) in which a floating body (8) is guided moveably depending on the fluid level within a display path, on which floating body a triggering element (10) is disposed that triggers a switching process of an electrical switching device by acting on at least one detector element (12) that is in a position on the device corresponding to a pre-specified fluid level,
**characterised in that**
- a setting device (24, 26) is provided by means of which the at least one detector element (12) can be set to selectable positions corresponding to different fluid levels,
- the device (1) having a housing (14) that partially surrounds the riser pipe (6), and
- the setting device (24, 26) forming at least one guide track extending along at least part of the display path, along which a detector element or a number of detector elements (12) can be displaced in order to set the position and can be fixed in the selected setting position,
- the setting device (24,26) being located on the housing (14),
- the housing (14) having a front wall (16) with at least one break (20) that forms a viewing window and side walls (18) adjacent to the front wall (16), and
- on at least one side wall (18) the setting device (24, 26) comprising at least one guide track extending along the vertical axis of the housing (14).

2. The device according to Claim 1, **characterised in that** the setting device further comprises a displacement device (24, 26) by means of which the at least one detector element (12) can be displaced into selected setting positions.

3. The device according to Claim 1 or 2, **characterised in that** a number of detector elements (12) that can be set in respectively selected setting positions are provided.

4. The device according to any of the preceding claims, **characterised in that** at least one guide track is formed on both side walls (18).

5. The device according to any of the preceding claims, **characterised in that** the respective guide track is formed by a longitudinal slot (26) in the respective side wall (18).

6. The device according to Claim 5, **characterised in that** at least one detector support (22) containing a detector element (12) is provided in the space between at least one side wall (18) and the riser pipe (6), which detector support has a guide extension (30) which can be guided displaceably within the respective longitudinal slot (26).

7. The device according to Claim 6, **characterised in that** a pin (32) provided with an external thread adjoins the guide extension (30) of the respective detector support (22), which pin, with a clamping disc (34) that can be clamped onto the outside of the side wall (18) by means of a nut (36), forms a fixing device of the detector support (22).

8. The device according to Claim 7, **characterised in that** the respective detector support (22) with the guide extension (30) and the threaded pin (32) is formed by a one-part injection moulded part made of plastic, for example PA6, in which the detector element in the form of a reed switch (12) is embedded.

9. The device according to Claim 8, **characterised in that** embedded electrical connections of the reed switch (12) are guided outwardly by the threaded pin (32) and that its end forms a connecting plug (42) for the connection of a screw-in plug connector (44) that can be screwed onto the external thread of the pin (32).

## Revendications

1. Dispositif d'indication et/ou de contrôle de fluides,
- comprenant au moins un raccord (2,4) pour du fluide, qui débouche dans un tuyau (6) de montée dans lequel, en fonction du niveau du fluide dans un trajet d'indication, est guidé, avec possibilité de se déplacer, un corps (8) flottant sur lequel est monté un élément (10) de déclenchement, qui, par action sur au moins un élément (12) formant détecteur se trouvant sur le dispositif en une position correspondant à un niveau de fluide donné à l'avance, déclenche une opération de commutation d'un dispositif électrique de commutation,
**caractérisé en ce que**
- il y a un dispositif (24, 26) de réglage, au moyen duquel le au moins un élément (12) formant détecteur peut être mis en des positions sélectionnables correspondant à des niveaux de fluide différents,
- dans lequel le dispositif (1) a un boîtier (14) entourant en partie le tuyau (6) montant et
- dans lequel le dispositif (24, 26) de réglage forme au moins une voie de guidage s'étendant le long d'au moins une partie du trajet d'indication, voie le long de laquelle un éléments formant détecteur, ou plusieurs éléments (12) formant détecteur, peut, pour le réglage de position, coulisser et être fixé en une position de réglage sélectionnée,
- dans lequel le dispositif (24, 26) de réglage se trouve sur le boîtier (14),
- le boîtier (14) a une paroi (16) avant ayant au moins une interruption (20) formant un hublot ainsi que des parois (18) latérales voisines de la paroi (16) avant et
- le dispositif (24, 26) de réglage comprend, sur au moins une paroi (18) latérale, au moins une voie de guidage s'étendant le long de l'axe vertical du boîtier (14).

2. Dispositif suivant la revendication 1, **caractérisé en ce que** le dispositif de réglage comprend en outre un dispositif (24, 26) de déplacement au moyen duquel le au moins un élément (12) formant détecteur peut coulisser en des positions de réglage sélectionnées.

3. Dispositif suivant les revendications 1 ou 2, **caractérisé en ce qu'**il est prévu plusieurs éléments (12) formant détecteur réglables en des positions de réglage sélectionnées respectivement.

4. Dispositif suivant l'une des revendications précédentes, **caractérisé en ce qu'**au moins une voie de guidage est formée sur les deux parois (18) latérales.

5. Dispositif suivant l'une des revendications précédentes, **caractérisé en ce que** la voie de guidage respective, est formée par une boutonnière (26) dans la paroi (18) latérale concernée.

6. Dispositif suivant la revendication 5, **caractérisé en ce qu'**il est prévu, dans l'espace intermédiaire entre au moins une paroi (18) latérale et le tuyau (6) montant, au moins un support (22) de détecteur contenant l'élément (12) formant détecteur et ayant un embout (30) de guidage, qui est guidé à coulissement dans la boutonnière (26) concernée.

7. Dispositif suivant la revendication 6, **caractérisé en ce qu'**à l'embout (30) de guidage du support (22) de détecteur se raccorde un tourillon (32) qui est pourvu d'un filetage et qui, avec un disque (34) de serrage pouvant être serré à l'aide d'un écrou (36) sur le côté extérieur de la paroi (18) latérale, forme un dispositif de fixation du support (22) de détecteur.

8. Dispositif suivant la revendication 7, **caractérisé en ce que** le support (22) de détecteur est formé avec l'embout (30) de guidage et le tourillon (32) fileté par une pièce moulée par injection d'un seul tenant en matière plastique, par exemple en PA6, dans laquelle l'élément formant détecteur est incorporé sous la forme d'un interrupteur (12) reed.

9. Dispositif suivant la revendication 8, **caractérisé en ce que** des bornes électriques incorporées de l'interrupteur (12) reed sont guidées vers l'extérieur par le tourillon (32) fileté et **en ce que** son extrémité forme un connecteur (42) de raccordement d'une fiche (44) à vis qui peut se visser avec le filetage du tourillon (32).
